(19) Europäisches Patentamt
European Patent Office
Office européen des brevets

(11) Publication number: **0 430 421 B1**

(12) **EUROPEAN PATENT SPECIFICATION**

(45) Date of publication of patent specification: **29.03.95**

(51) Int. Cl.[6]: **C08G 18/32**, C08G 18/62, C08G 18/80, C08L 75/04

(21) Application number: **90311461.9**

(22) Date of filing: **18.10.90**

(54) **Polyurethane/silicone compositions.**

(30) Priority: **30.11.89 US 443413**

(43) Date of publication of application:
**05.06.91 Bulletin 91/23**

(45) Publication of the grant of the patent:
**29.03.95 Bulletin 95/13**

(84) Designated Contracting States:
**DE ES FR GB IT**

(56) References cited:
**EP-A- 0 091 250**
**DE-A- 3 535 497**
**US-A- 3 734 894**

**Database WPIL, no. 82-75502E, Derwent Publications Ltd, London, GB ; & JP-A-57123228**

(73) Proprietor: **GENCORP INC.**
**175 Ghent Road**
**Akron,**
**Ohio 44333-3300 (US)**

(72) Inventor: **Chihara, Kohji Y.**
**1775 Barlow Road**
**Hudson,**
**Ohio 44236 (US)**
Inventor: **Lenke, Gerd M.**
**330 Merriman Road**
**Akron,**
**Ohio 44303 (US)**

(74) Representative: **Stoner, Gerard Patrick et al**
**MEWBURN ELLIS**
**York House**
**23 Kingsway**
**London WC2B 6HP (GB)**

**EP 0 430 421 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to polyurethane blend compositions, and most preferably to primer-less, one-part, storage-stable, fast heat-curable, abrasion resistant coating compositions which are useful as low friction, environmentally stable coatings for elastomeric substrates and, more particularly, for weatherstrip substrates, including automotive window glass run channels made from ethylene-propylene-diene polymers (EPDM).

Heretofore, EPDM glass run channels used in automobiles ordinarily have been napped or coated in an effort to provide high abrasion resistance, low friction, and good release properties. Napping, however, requires electrostatic fiber planting, a costly process, while prior art coatings have been deficient in physical properties. For example, moisture curable polyether-polyurethane and polyester-polyurethane based coatings containing silicone oil provide abrasion resistance, but are difficult to control with respect to quality and application, because of lack of curing agents, and require a primer coating and/or surface treatment on the EPDM glass run channel substrate. Other coatings, such as various polyester-polyurethanes formulated with silicone oil for lubrication exhibit either inadequate abrasion resistance and/or have excessive incompatibility between the polyurethane and the silicone oil.

Japanese Patent applications JP 60-173011 (1985), JP 62-41215 (1987), JP 63-130616, and JP 64-6017 (1989), relate to polyurethane compositions made from low molecular weight polyolefin polyols and are directed to adhesives, coatings, and sealants. In Japanese Patent JP 60-179251 (1985), a mixture of a low molecular weight polyolefin polyol and a blocked methylene diphenyl diisocyanate is utilized as an adhesive for splicing EPDM glass run channels and weather stripping, while JP 60-181137 (1985) suggests that the same composition can be used as an adhesive to obtain adhesion between EPR (ethylene-propylene rubber) and metal as well as between plastics and rubber. JP 61-136528 (1986) relates to a low molecular weight polyolefin polyol mixed with an N-halogenated amide functional compound used as a coating primer for EPDM glass run channels where the top coat is a polyester-urethane based coating containing silicone oil while JP 61-137735 (1986) discloses the same composition as an adhesive for fiber flocking on EPDM glass run channels. Japanese patent application JP 60-179470 and patent JP 60-24821 relate to the utilization of greater than 98 percent hydrogenated polyhydroxy polybutadiene as (a) a crosslinking agent, or (b) an additional polyol component in a polyester and/or polyether urethane coating compositions which are applied to flocked substrates and enhance the resistance thereof against abrasion, weathering, and heat.

We find that mechanically tough, abrasion resistant low friction thermosetting coating compositions may be obtained by using a polymeric binder system comprising a blocked polyurethane polymer produced by reacting a low molecular weight hydroxyl terminated hydrogenated diene polymer or polyolefin, preferably a hydrogenated polydiene, with excess equivalents of polyisocyanate and then blocking the free isocyanate groups;

a crosslinking agent coreactive with the blocked polyurethane, and from about 1 to about 100 weight parts of silicone oil per 100 weight parts of blocked polyurethane. The coating is applied to the substrate, e.g. EPDM rubber, by any suitable means, for example as a solution or dispersion in a suitable, non-reactive, volatile solvent, e.g. toluene. Optionally, micropowders or fillers, organic solvents, and coloring pigments may be added to the polymeric binder.

### DESCRIPTION OF PREFERRED FEATURES

The abrasion resistant coating compositions of the present invention are based upon a blocked polyurethane, a crosslinking agent, preferably amineterminated, and silicone oil.

The blocked polyurethane component is obtainable by reacting a hydroxyl terminated hydrogenated diene polymer or polyolefin with excess equivalents of diisocyanate, where the resulting free isocyanate end groups are blocked with a suitable blocking agent which will unblock upon heating. Typical diene monomers to produce the diene polymers are conjugated dienes, having from 4 to 10 carbon atoms, or combinations thereof, such as 1,3-butadiene, isoprene or dimethyl butadienes and the like. The polymerization of the diene monomer, typically, may be done via anionic initiation (e.g. with dilithium hydrocarbyl initiators) or via free-radical polymerization, e.g. by initiation with hydrogen peroxide, which also introduces hydroxy end groups. In case of anionic polymerization, OH-end groups are advantageously introduced by reaction of the polymeric carbanion chain ends with ethylene oxide. These techniques are generally well known to the literature. The hydroxy-functional polydienes may be hydrogenated, for example, partially or substantially (preferably at least 90 or 95% of the unsaturated sites), or even completely hydrogenated, according to any conventional method known to the art and to the literature. Complete hydrogenation of various diene polymers such as 1,4-polyisoprene is equivalent to an alternating ethylene/ propylene hydrocarbon polymer.

The intermediate hydroxy-functional polymers of the present invention have a number average molecular weight from 500 to 15,000 and preferably from 1,000 to 8,000. Intermediates are desirably liquid at room temperature, but can have a melting point up to about 80°C. Preferred intermediates are hydroxyl functional telechelic, completely hydrogenated diene polymers containing 2 to 6 and preferably 2 to 4 hydroxy end groups per polymeric molecule (polymer unit). Preferred hydroxyl functional polyolefins are derived from hydrogenated polybutadiene, poly(butadiene-styrene), polyisoprene, and the like. Particularly preferred intermediates are hydroxy terminated polydienes, which are completely hydrogenated (i.e., have less than 1 or 2 percent unsaturation sites), and contain the desired hydroxyl functionality. Polymers with more than two hydroxyl groups on the average per polymer molecule can be considered as branched or star-type polymers.

The hydroxyl functional polyolefins can also be made by utilizing minor amounts (i.e. up to 50 mole percent and preferably up to 20 mole percent) of ethylenically unsaturated comonomers such as styrene, methacrylonitrile, vinylidene chloride vinyl toluene, alpha-methylstyrene, divinylbenzene, and similar aromatic monomers; or vinyl monomers, such as acrylonitrile, and similar aliphatic vinyl monomers; or hydroxyl functional ethylenically unsaturated monomers such as 2-hydroxyl ethyl acrylate and methacrylate, 2-hydroxy propyl acrylate and methacrylate and similar hydroxy alkyl acrylates. Regardless of the type of intermediate polyolefin, it should contain at least 1.5 hydroxyl groups and preferably from about 1.8 to about 6 hydroxyl groups per average molecule.

An especially preferred intermediate polyolefin is a hydrogenated butadiene polymer. Such an intermediate is commercially available as Polytail H and Polytail HA sold by Mitsubishi Kasei Corp., and has the very generalized structure:

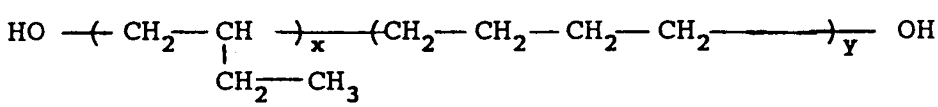

wherein X and Y are randomly distributed and the structure can contain additional -OH groups, and wherein the X/Y ratio, the -OH number per polymeric molecule, the physical state at 25°C, and the melting points are as follows:

| | Polytail H | Polytail HA | Preferred Range |
|---|---|---|---|
| X/Y | 2/8 | 9/1 | 0.10 to 10.0 |
| OH Number* | 2.3 | 1.8 | 1.5 - 4 |
| Physical State | Waxy solid | Liquid | Liquid to low melting solid (MP ≦ 80°C) |

* Number OH groups/average molecule

The hydroxyl functional polyolefin intermediates described above are reacted with excess equivalents of a polyisocyanate $R{(NCO)}_n$, where n is 2 to 4 and preferably 2.0 (i.e. diisocyanate) and R is aliphatic, aromatic, or combinations thereof, having from 4 to 100 carbon atoms and preferably from 4 to 20 or 30 carbon atoms to produce an isocyanate terminated functionally reactive urethane prepolymer. At least about 1.8 equivalents and preferably from about 2 to about 8 equivalents of the polyisocyanate reactant are charged per equivalent of hydroxyl functional hydrocarbon polymer to produce the desired urethane prepolymer. Preferred aromatic diisocyanates include 4,4-methylene diphenyl isocyanate (MDI), as well as modified MDI known as Isonates (Dow Chemical), toluene diisocyanate (TDI) such as the 2,4- or 2,6-isomers, as well as mixtures thereof, 1,4-phenylene diisocyanate, m- and p-xylenene diisocyanates (XDI), and the like. Preferred aliphatic diisocyanates include 1,6-hexane diisocyanate, mixed trimethylhexane diisocyanate (TMI), isophorone diisocyanate (IPDI), and the like. Mixtures of various polydiisocyanates can be used if desired.

Suitable blocking agents for blocking the isocyanate terminated urethane prepolymer are known to the art and to the literature and include various lactams having from 3 to 20, or to 12, carbon atoms, such as epsilon-caprolactam, propiolactam, dimethyl propiolactam, 2-pyrrolidone, gamma-valerolactam, epsilon-lauryllactam, and the like. Another group of blocking agents include the various ketoximes having from 3 to 20 carbon atoms such as: dimethyl-, methylethyl-, diisopropyl-, dicyclohexy-ketoxime, and the like. Various phenols, such as 4-hydroxy-(methyl) benzoate, methyl salicylate, ethyl salicylate, phenol, o-, m-, and p-cresol, and the like, containing from 6 to 20 carbon atoms can also be utilized. Various cyclic ureas can

also be utilized having a total of from 3 to 12 carbon atoms such as trimethylene or tetramethylene urea. Various enamines can also be utilized having the formula

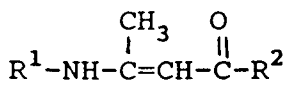

where $R^1$ and $R^2$, independently, are alkyl having from 1 to 4 carbon atoms. Another group of blocking agents is the various dicarbonyl compounds having the general formula

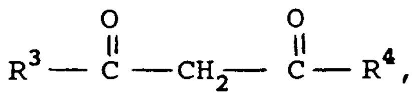

where $R^3$ and $R^4$, independently, is an alkyl having from 1 to 6 carbon atoms, phenyl, or $R^5O$, where $R^5$ is hydrogen or an alkyl having from 1 to 12 carbon atoms such as: acetylacetone, diethylmalonate, dimethylmalonate, acetylethyl acetate, and the like. Still other blocking agents include benzotriazole, the various phenylimidazoles, and the like. The amount of blocking agent utilized should be generally an approximate equivalent ratio of NCO/blocking agent of from 0.5 to 2.0 and preferably from 0.9 to 1.1. Preferred blocking agents include caprolactam and the various ketoximes.

Crosslinking or curing agents having $-NH_2$, $-NHR^6$ where $R^6$ is an alkyl having from 1 to 4 carbon atoms, -OH, or -SH groups are utilized to react with the blocked or unblocked isocyanate groups of the urethane prepolymer upon heating. Such crosslinking or curing agents are known to the art and to the literature. Particularly preferred curatives or crosslinking agents comprise aliphatic, primary or secondary di-, tri-, and tetra-functional amines having a boiling point above 100 ° C and preferably above 180 ° C. Useful amine crosslinking agents include, for example, polyoxypropylene- or polyoxy(propylene/ethylene)-based primary di- and triamines sold by Texaco Chemical Company under the tradename "Jeffamine ". Suitable examples are those with the current trade names T-403 (triamine; MW 480 to about 500), EDR-148 (diamine; MW about 150), T-3000 (triamine; MW about 3,000), T-5000 (triamine; MW about 5,000), D-230 (diamine; MW about 200), D-400 (diamine; MW about 400), or D-2000 (diamine; MW about 2,000). Other crosslinking agents include polyamine resins containing amino end groups as sold by Henkel Corporation under the tradenames "Versamid" or "Genamid ". Again, suitable examples are resins currently sold as Versamids 100, 115, 125, 140, 150, 250, or Genamids 250, 747, 2000, . Still other useful amine curatives include isophoronediamine (Huels Co.), mixed trimethylenediamine (TMD; Huels Co.), N,N'-diaminoethylpiperazine, N-aminoethylpiperazine, 1,4-cyclohexanediamine, 1,6-hexanediamine, 1,4-butanediamine, diethylenetriamine, m- or p-xylylenediamine, ethylenediamine, liquid poly(dimethylsiloxane)-diamine; various aromatic di- or triamines, which are liquid, or low melting, soluble or dispersible in the coating mixture, such as a ring methylated phenylenediamine (RDX-66884, sold by Interez Co.) or poly(tetramethylene oxide)-bis-(4-aminobenzoates) (Polyamine-650 and -1000 sold by Air Products).

Other useful, but not preferred, crosslinking agents include polyols (diols, triols or tetrols) having a number average molecular weight of from 200 to 1,000, which may be used either alone or in combination with diamines, and generally have a total of from 2 to 100 carbon atoms. Desired polyols have primary hydroxyl groups, as well as tertiary, secondary or primary amino groups in their structures, such as triethanolamine, diethanolamine or ethanolamine. Curatives with two or more sulfuryl groups or combinations of $NH_2$, OH and SH can also be utilized. The ratio of blocked isocyanate groups to curative groups ($-NH_2$, $-NHR^6$, -OH, or -SH) is generally from 0.8 to 4.0, and preferably from 1.0 to 2.0. Shelf life of coatings containing a crosslinking agent, such as polyamine, may be at least two weeks at ambient temperatures.
Variable amounts of silicone oil are added to the composition or mixture of blocked polyurethane and crosslinking agent. Silicone oils are low molecular weight liquids or fluid silicone polymers and generally have a silicone backbone structure comprising alternate silicon and oxygen atoms with the generalized structure $\{SiR^*_2O\}_n$, where R*, independently is an alkyl group having from 1 to 4 carbon atoms and preferably is methyl, and "n" is from 2 to 5,000. The silicon polymer can also contain minor amounts, that is up to 40, or up to 10 percent,of repeating units such as fluoroalkyl (1 to 4 carbon atoms), or phenyl, as well as substituted hydrogen, chlorine or alkoxy (1 to 4 carbon atoms) groups. Preferred silicone oils for use with the present invention have a viscosity from 0.5 centistokes to 2,500,000 centistokes and preferably from 500 to 1,000,000 centistokes. Preferred silicone oils are linear polydimethylsiloxanes, with trimethylsiloxy terminated polysiloxanes and derivatives thereof being most preferred. Silicone oils are added to the blocked polyurethane and cross-linker mixture at levels from 1 part to 100 parts per 100 parts by weight blocked polyurethane, more preferably from 5 parts to 80 parts per 100 parts of blocked polyurethane.

Although curing of blocked polyurethanes with a polyamine curing agent normally does not require an added catalyst, urethane curing catalysts can be utilized, especially if polyols are used as curatives. Typical catalysts include, for example, stannous octoate, dioctyltin dilaurate, and various tertiary amines. Advantageously, these catalysts are added during the preparation of the isocyanate terminated hydrocarbon polyols to assist in the formation of the isocyanate terminated prepolymer and/or to facilitate the blocking of the isocyanate groups. The amount of the catalyst is generally from 0.1 percent to 5 percent catalyst by weight based upon the total amount, by weight, of reactants which form the blocked polyurethane.

The blocked polyurethane polymer may be prepared by first mixing a hydroxy terminated polyolefin, such as hydrogenated hydroxy terminated polybutadiene with dry toluene. A catalyst, such as dibutyltin dilaurate, may be added, if desired. The dried hydroxy-polyolefin solution is added slowly to a solution of diisocyanate in anhydrous toluene over a time period of about 0.5 to 2 hours, under nitrogen, while vigorously agitating the resulting mixture at temperatures of from 100 °C to 120 °C. Agitation can continue until the isocyanate content reaches approximately the calculated theoretical level. Thereafter, a blocking agent is added to the mixture and allowed to react with the terminal NCO groups. The blocking reaction may be monitored by transmission IR or by titration of the NCO with dibutylamine.

The resulting blocked polyurethane polymer solutions are compounded with silicone oil and a cross-linking agent to form a thermosetting polymeric binder.

Compounding additives, such as micropowders of fumed silica, nylon, polyethylene, Teflon, polystyrene, molybdenum disulfide, glass beads, which serve as fillers to control viscosity and provide a flat, non-glossy appearance, proper hardness and toughness, to the applied cured coating film may be added to the polymeric binder mixture. Micropowders may be added on a weight basis, from 5 to 60 parts per 100 parts, by weight, of organic coating components (binder). Toluene, xylene, and/or 1,1,1-trichloroethane can be added, if desired, to provide minor adjustments to suit the individual coating process used to apply the coating to the substrate. Pigments such as carbon black, titanium dioxide, or similar color opacifying pigments may be added if desired.

The resulting compounded coating may be applied directly to EPDM or similar elastomeric substrate without first applying a primer coating (i.e. free of a primer coating) or otherwise pre-treating the substrate surface. Application may be by dip coating or other suitable application method. The applied coating is heated for a time sufficient to cure the coating, typically around four minutes at temperatures above 120 °C, and preferably between 170 °C and 200 °C. The appearance of the cured coating film is uniform and homogeneous. A non-uniform appearance would indicate a phase separation and unacceptable film, as is often the case with unsatisfactory prior art compositions. Embodiments of the present films can be rubbed with acetone without removing any coating, which indicates a completely cured and crosslinked polymeric binder, as well as good dispersion of silicone oil in the cured coating matrix.

The coating composition of the present invention may be applied either before, concurrently with, or after vulcanization of an EPDM substrate. We have found that in this way it is possible to obtain a cured coating film which exhibits a hard surface having very high abrasion resistance and a low friction coefficient, as well as the other desirable cured film properties previously mentioned. Subsequent operations, such as die cutting at elevated temperatures do not degrade the cured film. In addition to utilization as a coating on an automotive glass run channel, the coating compositions described herein may also be generally useful to reduce friction, as well as to improve resistance to weather, heat, ozone, ultraviolet light, marring of surfaces, and the like, and thus can be utilized with regard to windshield wipers, upholstery, engine mounts, luggage.

Embodiments of the present invention are now described with reference to the following illustrative examples.

## Comparative Examples

### I. Preparation of Blocked Urethane Prepolymers

#### Solution A Preparation

Into a 2-liter reaction flask equipped with an air-driven stirrer was charged toluene (550 ml). Under dry nitrogen gas atmosphere, 108 ml toluene was distilled off to eliminate water. 52 g methylene diphenyl diisocyanate (MDI, 208 mmoles) was mixed with the dry toluene to give Solution A.

Solution B Preparation

Into another 2-liter reaction flask, equipped with a stirrer, was charged 218.8 g Polytail H (100 mmoles; 200 meq. OH) and 600 ml toluene. Polytail H (Mitsubishi Chem. Ind.) is a hydroxy-terminated polybutadiene which is ~ 100% hydrogenated. Its approximate structure is:

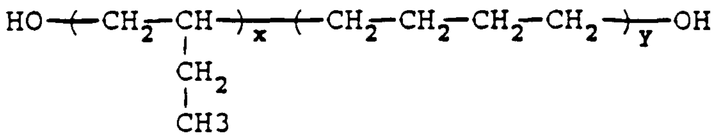

(x/y = 2:8)

The distributions of the (x) and (y) moieties are mostly random and the compound, on the average, contains about 2.3 hydroxyl groups per molecule.

The mixture was stirred for 1 hour at 105-110 °C, under dry nitrogen gas flow, and 150 ml toluene was distilled off to azeotrope off water. The solution was mixed with 6 ml DABCO T-12 (dibutyltin dilaurate from Air Products) to give Solution B.

Capping The Hydrocarbon Polyol with MDI

Solution B was dropped into Solution A during 1.5 hours (under dry nitrogen gas flow) with vigorous agitation at 105-110 °C. The mixture was kept at 70 °C overnight with slow stirring and dry nitrogen gas flow, after which the isocyanate content was determined to be 0.185 meq./g (in agreement with the calculated amount).

Blocking of the Isocyanate Group with Caprolactam

A total of 23 g (228 mmoles) of caprolactam was added to the mixture and refluxed for 3 hours. The caprolactam blocking reaction was monitored by transmission IR.

Analysis and Characterization of the Coating Resin

The reaction product (polyolefin diol/MDI/caprolactam) was analyzed by NMR, HPGPC and DSC. The peak molecular weight was ~ 8,000, which indicated that the average repeating unit (n) of [(Polytail H)-(MDI)] is about 2 in structure (I).

Structure I is as follows:

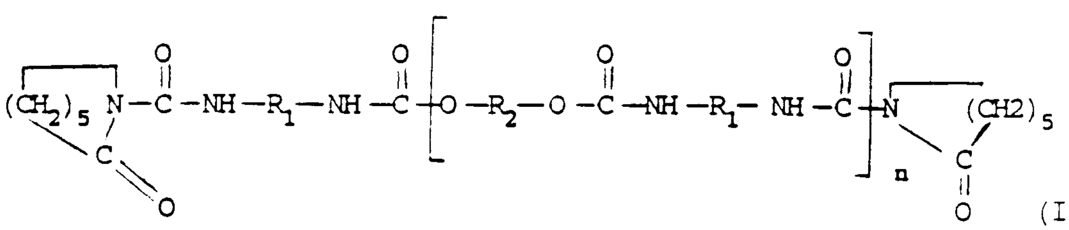

(I)

$R_1$ =

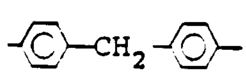

$R_2$ = hydrocarbon diradical of polyolefin diol.

There was a by-product with molecular weight ~ 500. It was identified as:

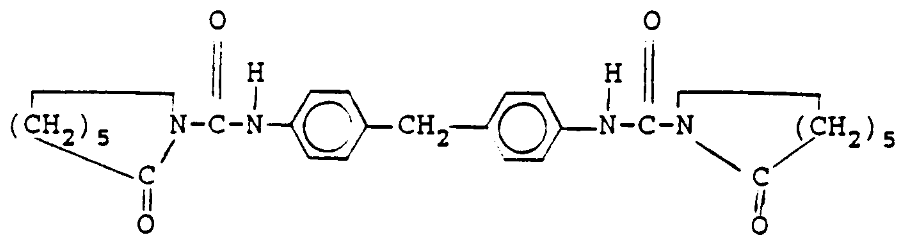 (II)

This is MDI with both isocyanate groups blocked with caprolactam, structure (II). The final reaction mixture was a solution of 29% solids in toluene.

A portion of the reaction mixture (278 g) was heated under dry nitrogen flow at 70-90 °C for ~ 3 days to drive off the solvent and isolate a sample of the solid product. 80 g of rubbery material (Resin I) was obtained.

HPGPC analysis indicated no change of the molecular weight distribution of the product (Resin I) before and after the above mentioned heat stripping of solvent. This suggested that Resin I is stable at about 90 °C for more than 3 days.

Using the same procedure set forth herein-above, 2-butanone oxime-blocked resin was prepared from Polytail H capped with MDI. The resin structure of the products was very similar to resin I except for the blocking agent.

Another resin (Resin II) (A control) was also prepared by capping a non-hydrocarbon, that is polycaprolactone polyester polyol (Tone Polyol, molecular weight ~ 2,000; hydroxy content 1.0 meq./g, Union Carbide) with MDI and blocking the free isocyanate groups with caprolactam. The synthetic method was very similar to that used for Resin I. Analysis by NMR, HPGPC and DSC indicated the following structure: (caprolactam) -(MDI)-[ (Tone-polyol)-(MDI)]$_n$-(caprolactam) (III).

The peak molecular weight distribution was ~ 8,200, indicating the average n value to be ~2.

II. Silicone Oil Compatibility

Example

The mixtures A, B, C, D, E and F in Table 1 were prepared by mixing with a magnetic stirrer and heating at ~ 60 °C. Silicone oil phase separation of the mixtures was examined visually after cooling to room temperature. A, B, C and E did not show any phase separation after 2 weeks storage at room temperature. Samples D and F did not show any phase separation in 2 days; however, in 2 weeks a transparent phase was observed at the bottom. The appearance of sample A was water-clear at $\geq$ 30 °C and slightly turbid at 25 °C. Samples B, C, D, E and F (fumed silica added) were translucent. The above mentioned test results are set forth in Table 1.

Comparison Examples (Polyester Intermediate)

The mixtures G, H, Q and R in Table 2 were likewise prepared by mixing with a magnetic stirrer and heating at ~60 °C. Phase separation of the mixtures was examined visually after cooling to room temperature. Sample H showed phase separation in 30 minutes after the magnetic stirring was stopped. Samples I, J, K, L and M showed phase separation within 1 day. Samples N, O, P and Q were not clear after a few days; however, they clearly showed a transparent phase in 2 weeks. Samples Q and R did not show any phase separation after 2 weeks. The above mentioned test results are set forth in Table 2.

Coating Appearance

A piece of EPDM rubber glass run channel was dip-coated with each of the mixtures in Table 1. The appearance of the coatings during air drying was visually observed. All the mixtures (Resin I) of B, C, D, E and F dried to form a flat and uniform coating. The mixture A was uniform but shiny. The above mentioned test results are shown in Table 1.

Comparison Examples (Polyester Intermediate)

A piece of EPDM rubber glass run channel was likewise dip-coated with each of the mixtures in Table 2. The appearance of the mixtures during air drying was visually observed. Samples H, I, J, K, L and M (Resin II) dried to an inhomogeneous coating containing shiny spots with 1-2 mm diameter. This spotting is clear evidence of the phase separation of silicone oil. However, mixtures of N, O, P and Q (high silica level versions of J, K, L and M, respectively) dried to a flat and uniform coating. However, coatings from samples N, O, P and Q had very low strength. Table 2 shows that these samples also have poor abrasion resistance. A, G and R, which had no silicone oil, dried to form a shiny and smooth coating. The above mentioned test results are shown in Table 1 or Table 2.

III. Coating Cure Conditions

Each piece of EPDM rubber glass run channel, which was dip-coated with the mixtures, was heated at 200 °C for 4 minutes in an air oven. The heated coatings were rubbed with acetone-soaked paper towel immediately after the heating. The paper towel was visually examined to detect evidence of lack of cure. The results are as follows.

Coatings A, B, C, G, H and I (no cross-linking agent added) and coatings K, L, M, 0, P and Q (low molecular weight amine crosslinking agent added) showed stains using the acetone wipe test. The staining indicates incomplete cure of the coatings. None of the coatings containing amine-terminated polymeric cross-linking agents (e.g. compounds D, E, F, J, N and R) showed staining, indicating complete cure. Coatings of compounds D, E and F (Resin I) remained flat and smooth after the wipe test; however, coatings of compounds J and N lost the silicone oil from the 1-2 mm diameter spots on the surfaces. The above mentioned test results are shown in Table 1 or Table 2.

IV. Tests of Abrasion and Friction Coefficient

(i) A sponge bulb or a piece of uncoated EPDM rubber weatherstrip for an automobile was spray-coated with the mixture E in Table 1, heated at 200 °C for four minutes in a hot air oven. The coated sponge bulb was tested on a Weizenbeek abrasion resistance tester at 60 cycles per minute and 3 pounds load. The abrasion resistance was 25,500 cycles; the coating thickness was ≦ 5 $\mu$ m measured by an optical microscope. The abrasion resistance was ~20 cycles without the coating.

(ii) A piece of uncoated EPDM rubber glass run channel was directly brush-coated with the mixture of 100 parts 2-butanone oxime blocked Polytail H (capped with MDI), 300 parts toluene, 400 parts 1,1,1-trichloroethane, 20 parts silicone oil (Union Carbide L-45), fumed silica (Degussa TS/100), 14 parts nylon powder (400 mesh; Rilsan (O), and 9.6 parts Jeffamine T403 (Texaco Chemical Co.). The coated EPDM rubber glass run channel was heated at 130 °C for five minutes in an air oven. The coating appearance was flat and uniform. The crockmeter abrasion resistance was 34,000 cycles and the coating thickness was 29 $\mu$ m. The coating showed no abrasion after 3,000 cycles on the crockmeter abrasion tester, when mud was sprayed at the beginning and every 1,000 cycles, where the mud is prepared by mixing 3 parts water and 1 part dust (Type 1 - 0.25 parts; Type 2 - 0.75 parts (JIS-Z-8901) . The coating embodying the invention reinforced with a higher level of fumed silica and nylon powder is tough enough to resist sharp edges (e.g., of sands).

(iii) A piece of uncoated EPDM rubber glass run channel was sand-blasted on the surface at 40 psi, then sand wiped off with toluene, brush-coated with 5 percent benzophenone in toluene, UV irradiated, and spray-coated with coating E. The coated glass run channel was heated in an air oven at 200 °C for 4 minutes. The appearance of the coating was flat, smooth, uniform and black without any indication of separation of silicone oil. The cured coating was tested using a modified crockmeter abrasion tester, in which a glass edge slides at a 3 kg load at 66 Hz on a given test specimen. The glass edge was reground at every 5,000 cycles with No. 4 sandpaper. This crockmeter tester is equipped with a sensor to measure force or friction. The failure of the crockmeter test was determined at the cycle at which the friction coefficient went beyond 0.38. The test was repeated at least twice.

The coating thickness was measured using an optical microscope after the crockmeter abrasion test. The results of the crockmeter abrasion test and thickness measurement are shown in Table 3 together with reference data for comparison. The reference samples were EPDM rubber glass run channels coated with a urethane coating containing silicone oil.

No coating debris was observed for samples 1 and 2 during and after the crockmeter test. The microscopic measurement of samples 1 and 2 indicated almost no difference in the coating thickness

between the coating which contacted the glass abrader versus the uncontacted area.

On the other hand, coating debris was observed for all of the reference samples during and after the crockmeter test. The glass edge penetrated the coating layers to the EPDM rubber substrate before the failure of the crockmeter test for all the reference samples.

A piece of EPDM glass run channel coated with mixture E was heated to 150 °C in an air oven and manually rubbed with the glass edge (used for the crockmeter test) with ≧ 5 kg load while in the hot air oven. There was no streak mark after the rubbing.

A piece of EPDM glass channel kept on a laboratory bench for two months was directly spray-coated with compound E, heated at 200 °C for 4 minutes and tested on the crockmeter. No coating debris and no adhesion failure were observed at 10,000 cycles. This indicated that high abrasion resistance can be achieved without surface treatment of EPDM substrate that has been stored for a long period of time. Previously, it was observed that glass run channels develop a surface bloom with time. Using more polar coatings such as Versikote, it is necessary to thoroughly clean the surface to get good adhesion.

Mixtures with high silica content and Resin II (N, O, P and Q) became flat and uniform coatings after heating at 200 °C for 4 minutes; however, their strength was so low that the coatings were abraded even by fingernail rubbing.

Table 3 shows how coatings embodying the present work have the best abrasion resistance among the available coatings for EPDM glass run channels.

TABLE 1

| Mixture: | A | B | C | D | E | F |
|---|---|---|---|---|---|---|
| **Ingredients** (parts by weight) | | | | | | |
| Resin I | 100 | 100 | 100 | 100 | 100 | 100 |
| Toluene | 900 | 900 | 900 | 900 | 900 | 900 |
| Silicone Oil (Union Carbide L-45) | 25 | 15 | 20 | 20 | 20 | 20 |
| Fumed Silica (Degussa TS-100) | - | 8 | 8 | 8 | 8 | 8 |
| Jeffamine ED600 (polyoxyethylene-diamine) | - | - | - | 6.5 | - | - |
| Jeffamine T403 (polyoxypropylene-triamine) | - | - | - | - | 3.2 | - |
| Genamid 747 (polyamidediamine) | - | - | - | - | - | 2.3 |

TABLE 1 (con't)

| Mixture: | A | B | C | D | E | F |
|---|---|---|---|---|---|---|
| **Silicone Oil Phase Separation** | | | | | | |
| Phase Separation Occurrence | > 14 days | > 14 days | > 14 days | 2-14 days | > 14 days | 2-14 |
| Appearance During Drying on Substrate | Uniform | Uniform | Uniform | Uniform | Uniform | Uniform |
| State of Cure After Heating at 200°C for 4 min. | Incomplete | Incomplete | Incomplete | Complete | Complete | Complete |
| Coating Appearance After Heating at 200°C for 4 min. | Uniform Shiny Black | Uniform Flat Black | Uniform Flat Black | Uniform Flat Black | Uniform Flat Black | Uniform Flat Black |
| Crockmeter Abrasion Resistance | - | - | - | Outstanding | Outstanding | - |

TABLE 2

| Mixture: | G | H | I | J | K | L |
|---|---|---|---|---|---|---|
| Ingredients (parts by weight) | | | | | | |
| Resin II (Control) | 100 | 100 | 100 | 385 | 385 | 385 |
| Toluene | 900 | 900 | 900 | 900 | 900 | 900 |
| Silicone Oil (Union Carbide L-45) | - | 25 | 15 | 21 | 42 | 21 |
| Fumed Silica (Degussa TS-100) | - | - | 8 | 7 | 7 | 7 |
| Genamid 747 (polyamidediamine) | - | - | - | 44 | - | - |
| Jeffamine ED148 (polyoxyethylenediamine) | | - | - | - | 27 | - |
| Trimethylhexa-methylenediamine | - | - | - | - | - | 25 |

TABLE 2 (Con't)

| Mixture: | G | H | I | J | K | L |
|---|---|---|---|---|---|---|
| **Silicone Oil Compatibility** | | | | | | |
| Phase Separation Occurrence | - - | < 30 min. | < 1 day | < 1 day | < 1 day | < 1 day |
| Appearance During Drying on Substrate | - - - | Shiny Greasy Spots | Shiny Greasy Spots | Shiny Greasy Spots | Shiny Greasy Spots | Shiny Greasy Spots |
| State of Cure After Heating at 200°C for 4 min. | Incomplete | Incomplete | Incomplete | Complete | Incomplete | Incomplete |
| Coating Appearance After Heating at 200°C for 4 min. | Uniform Shiny | Non-Uniform | Non-Uniform | Non-Uniform | Non-Uniform | Non-Uniform |
| Crockmeter Abrasion Resistance | - | Poor | Poor | Poor | Poor | Poor |

TABLE 2 (Con't)

| Mixture | M | N | O | P | Q | R |
|---|---|---|---|---|---|---|
| Ingredients (parts by weight) | | | | | | |
| Resin II (Control) | 385 | 385 | 385 | 385 | 385 | 385 |
| Toluene | 900 | 900 | 900 | 900 | 900 | 900 |
| Silicone Oil (Union Carbide L-45) | 81 | 81 | 162 | 81 | 81 | - |
| Fumed Silica (Degussa TS-100) | 27 | 46 | 46 | 46 | 46 | - |
| Genamid 747 (polyamidediamine) | - | 11.5 | - | - | - | 11.5 |
| Jeffamine ED148 (polyoxyethylenediamine) | - | - | 7.0 | - | - | - |
| Trimethylhexa-methylenediamine | - | - | - | 6.4 | - | - |
| 1,3-bisamino-methylcyclohexane | 7.4 | - | - | - | 7.4 | - |

TABLE 2 (Con't)

| Mixture | M | N | O | P | Q | R |
|---|---|---|---|---|---|---|
| **Silicone Oil Compatibility** | | | | | | |
| Phase Separation Occurrence | < 1 day | 2-14 days | 2-14 days | 2-14 days | > 14 days | > 14 days |
| Appearance During Drying on Substrate | Shiny Greasy Spots | Flat Uniform | Flat Uniform | Flat Uniform | Flat Uniform | Shiny Uniform |
| State of Cure After Heating at 200°C for 4 min. | Incomplete | Complete | Incomplete | Incomplete | Incomplete | Complete |
| Coating Appearance After Heating at 200°C for 4 min. | Non-Uniform | Flat Uniform Whitish | Flat Uniform Whitish | Flat Uniform Whitish | Flat Uniform Whitish | Shiny Uniform Black |
| Crockmeter Abrasion Resistance | Poor | Very Poor | Very Poor | Very Poor | Very Poor | - |

TABLE 3

| Sample Number | Coating Sample | Initial Friction Coefficient | Crockmeter Abrasion Resistance (Cycles) | Thickness (μm) | Abrasion Resistance Index (Cycles/μm) |
|---|---|---|---|---|---|
| 1 | Present Invention | 0.095 | 30,000 | 15.5 | 1935 |
| 2 | Present Invention | 0.095 | 29,500 | 11.5 | 2565 |
| 3 | Nova Nummi[1] | 0.190 | 15,000 | 24.0 | 625 |
| 4 | Nova Nummi[1] | 0.113 | 30,000 | 24.0 | 1250 |
| 5 | Nova Nummi[1] | 0.113 | 30,000 | 24.0 | 1250 |

[1]Nova Nummi is a polyether-ester polyurethane and contains a primer.

TABLE 3 (Con't)

| Sample Number | Coating Sample | Initial Friction Coefficient | Crockmeter Abrasion Resistance (Cycles) | Thickness (μm) | Abrasion Resistance Index (Cycles/μm) |
|---|---|---|---|---|---|
| 6 | Mazda CT20 | 0.208 | 11,900 | 26.7 | 446 |
| 7 | Mazda CT20 | 0.208 | 15,400 | 26.7 | 577 |
| 8 | Mazda CT20[2] | 0.038 | 13,384 | 50.0 | 246 |
| 9 | Mazda CT20[2] | 0.038 | 11,210 | 50.0 | 238 |

[2]coating is polyether-polyester urethane and contains a primer

## Claims

**Claims for the following Contracting States : DE, GB, FR, IT**

**1.** A heat-curable composition, comprising a mixture of:

(a) a blocked polyurethane prepolymer obtainable by

(i) reacting a hydroxyl-functional polyolefin intermediate, having on average at least 1.5 hydroxyl groups per molecule and a number average molecular weight of from 500 to 15000, with excess equivalents of a polyisocyanate according with the formula $R(NCO)_n$ where n is from 2 to 4 and R is $C_{4-100}$ aliphatic, aromatic or both, to leave free isocyanate groups and

(ii) blocking the free isocyanate groups with a blocking agent;

(b) a crosslinking agent having $-NH_2$, $-NHR^6$ (where $R^6$ is $C_{1-4}$ alkyl), -OH, or -SH curing groups, to react with the prepolymer on heating to cure it, and

(c) from 1 to 100 parts by weight of silicone oil, per 100 parts by weight of the blocked polyurethane prepolymer.

**2.** A composition according to claim 1 in which the polyisocyanate is a diisocyanate and R has from 4 to 30 carbon atoms.

**3.** A composition according to claim 1 or claim 2 in which the polyisocyanate is selected from 4,4-methylene-diphenylisocyanate, toluene diisocyanate, 1,4-phenylenediisocyanate, m- and p-xylenene diisocyanates, 1,6-hexane diisocyanate, mixed trimethylhexane diisocyanate and isophorone diisocyanate.

**4.** A composition according to any one of the preceding claims in which the excess of polysiocyanate involves at least 1.8 equivalents of isocyanate for each equivalent of the hydroxyl-functional intermediate.

**5.** A composition according to claim 4 in which from 2 to 8 equivalents of isocyanate are used for each equivalent of the hydroxyl-functional intermediate.

**6.** A composition according to any one of the preceding claims in which the hydroxyl-functional intermediate is a hydrogenated polydiene, optionally including up to 50mol% of residues of an ethylenically-unsaturated non-diene comonomer.

**7.** A composition according to claim 6 in which the hydrogenated polydiene is a polymer of $C_{4-10}$ diene monomer, and is at least 50mol% hydrogenated.

**8.** A composition according to claim 7 in which the hydrogenated polydiene is at least 95mol% hydrogenated.

**9.** A composition according to any one of the preceding claims in which the hydroxyl-functional intermediate has an average of from 1.8 to 6 hydroxyl groups per molecule.

**10.** A composition according to any one of the preceding claims in which the hydroxyl-functional intermediate has a number average molecular weight in the range from 1000 to 8000.

**11.** A composition according to any one of claims 1 to 5 in which the hydroxyl-functional intermediate is of the formula

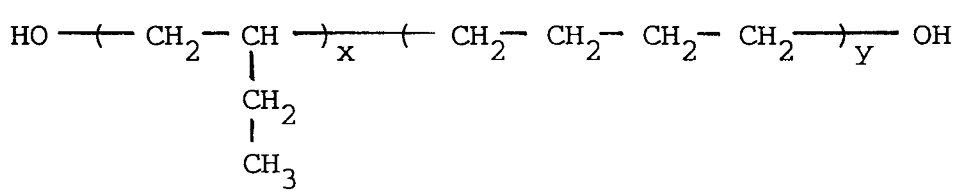

wherein the x and y units are randomly distributed, the x/y ratio is from 0.10 to 10.0 and wherein the

average number of OH groups per molecule is from 1.5 to 4.0.

**12.** A composition according to any one of the preceding claims in which the equivalent ratio of the free isocyanate groups to the blocking agent is from 0.5 to 2.0.

**13.** A composition according to claim 12 in which the equivalent ratio of the free isocyanate groups to the blocking agent is from 0.9 to 1.1.

**14.** A composition according to any one of the preceding claims in which the blocking agent is a lactam having from 3 to 20 carbon atoms.

**15.** A composition according to claim 14 in which the blocking agent is caprolactam.

**16.** A composition according to any one of claims 1 to 13 in which the blocking agent is a ketoxime having from 3 to 20 carbon atoms.

**17.** A composition according to claim 16 in which the blocking agent is dimethylketoxime, methylethylketoxime, diisopropylketoxime or dicyclohexylketoxime.

**18.** A composition according to any one of claims 1 to 13 in which the blocking agent is selected from
(i) $C_{6-20}$ phenols;
(ii) $C_{3-12}$ cyclic ureas;
(iii) dicarbonyl compounds of the formula

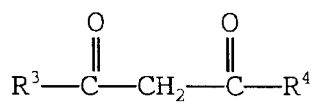

in which $R^3$ and $R^4$, independently, are $C_{1-6}$ alkyl, phenyl, or $R^5O$ where $R^5$ is H or $C_{1-12}$ alkyl;
(iv) enamines of the formula

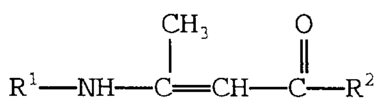

in which $R^1$ and $R^2$, independently, are $C_{1-4}$ alkyl;
(v) benzotriazole;
(vi) phenylimidazole.

**19.** A composition according to any one of the preceding claims in which the amount of curing agent used is such that the ratio of blocked isocyanate groups to curing groups is from 0.8 to 4.0.

**20.** A composition according to claim 19 in which the ratio of blocked isocyanate groups to curing groups is from 1.0 to 2.0.

**21.** A composition according to any one of the preceding claims in which the crosslinking agent is selected from aliphatic di-, tri- and tetra-functional amines, primary or secondary, having a boiling point above 100 °C.

**22.** A composition according to any one of the preceding claims using from 5 to 80 parts by weight of the silicone oil to 100 parts by weight of the blocked polyurethane prepolymer.

**23.** A composition according to any one of the preceding claims in which the silicone oil has the structure

$(SiR^*_2O)_n$

in which
$R^*$ is $C_{1-4}$ alkyl and
n is from 2 to 5000,
and $R^*$ optionally includes up to 10 repeat units% of $C_{1-4}$ fluoroalkyl, phenyl, $C\ell$ or $C_{1-4}$ alkoxy groups.

**24.** A composition according to claim 23 in which the silicone oil is a linear polydimethylsiloxane.

**25.** A composition according to any one of the preceding claims, comprising a micropowder filler in an amount of from 5 to 60 parts by weight to 100 parts by weight of the combined ingredients (a), (b) and (c).

**26.** A coating composition comprising a composition according to any one of claims 1 to 25 mixed with an unreactive organic solvent or diluent.

**27.** An article comprising a cured composition according to any one of claims 1 to 25.

**28.** An elastomer substrate having a coating of a cured composition according to any one of claims 1 to 25.

**29.** An elastomer substrate according to claim 28 in which the elastomer is EPDM rubber.

**30.** An elastomer substrate according to claims 28 or claim 29 which is a glass run channel for an automobile window.

**31.** A method comprising coating an elastomer substrate with a composition according to any one of claims 1 to 26 and curing the composition by heating.

**32.** A method according to claim 31 in which the elastomer substrate is of EPDM rubber.

**33.** A method according to claim 31 or claim 32 in which the elastomer substrate is a glass-run channel for an automobile window.

**34.** A method according to any one of claims 31 to 33 in which the composition is coated onto the elastomer substrate without first applying a primer coating to the elastomer substrate.

**35.** A method of making a heat-curable composition, comprising
(a) making a blocked polyurethane prepolymer by
(i) reacting a hydroxyl-functional polyolefin intermediate, having on average at least 1.5 hydroxyl groups per molecule and a number average molecular weight of from 500 to 15000, with excess equivalents of a polyisocyanate according with the formula $R(NCO)_n$ where n is from 2 to 4 and R is $C_{4-100}$ aliphatic, aromatic or both, to leave free isocyanate groups and
(ii) blocking the free isocyanate groups with a blocking agent;
and compounding the blocked polyurethane prepolymer with
(b) a crosslinking agent having $-NH_2$, $-NHR^6$ (where $R^6$ is $C_{1-4}$ alkyl, -OH, or -SH curing groups, to react with the prepolymer on heating to cure it, and
(c) from about 1 to about 100 parts by weight of silicone oil, per 100 parts by weight of blocked polyurethane prepolymer.

**36.** A method according to claim 35, qualified by the features of any of claims 2 to 24.

**37.** A method according to claim 35 or claim 36, further comprising blending a micropowder filler in an amount of from 5 to 60 parts by weight to 100 parts by weight of the combined blocked polyurethane prepolymer, crosslinking agent and silicone oil.

**Claims for the following Contracting State : ES**

1. A method of making a heat-curable composition, comprising
   (a) making a blocked polyurethane prepolymer by
   (i) reacting a hydroxyl-functional polyolefin intermediate, having on average at least 1.5 hydroxyl groups per molecule and a number average molecular weight of from 500 to 15000, with excess equivalents of a polyisocyanate according with the formula $R(NCO)_n$ where n is from 2 to 4 and R is $C_{4-100}$ aliphatic, aromatic or both, to leave free isocyanate groups and
   (ii) blocking the free isocyanate groups with a blocking agent;
   and compounding the blocked polyurethane prepolymer with
   (b) a crosslinking agent having $-NH_2$, $-NHR^6$ (where $R^6$ is $C_{3-4}$ alkyl, -OH, or -SH curing groups, to react with the prepolymer on heating to cure it, and
   (c) from about 1 to about 100 parts by weight of silicone oil, per 100 parts by weight of blocked polyurethane prepolymer.

2. A method according to claim 1 in which the polyisocyanate is a diisocyanate and R has from 4 to 30 carbon atoms.

3. A method according to claim 1 or claim 2 in which the polyisocyanate is selected from 4,4-methylene-diphenylisocyanate, toluene diisocyanate, 1,4-phenylenediisocyanate, m- and p-xylenene diisocyanates, 1,6-hexane diisocyanate, mixed trimethylhexane diisocyanate and isophorone diisocyanate.

4. A method according to any one of the preceding claims in which the excess of polysiocyanate involves at least 1.8 equivalents of isocyanate for each equivalent of the hydroxyl-functional intermediate.

5. A method according to claim 4 in which from 2 to 8 equivalents of isocyanate are used for each equivalent of the hydroxyl-functional intermediate.

6. A method according to any one of the preceding claims in which the hydroxyl-functional intermediate is a hydrogenated polydiene, optionally including up to 50mol% of residues of an ethylenically-unsaturated non-diene comonomer.

7. A method according to claim 6 in which the hydrogenated polydiene is a polymer of $C_{4-10}$ diene monomer, and is at least 50mol% hydrogenated.

8. A method according to claim 7 in which the hydrogenated polydiene is at least 95mol% hydrogenated.

9. A method according to any one of the preceding claims in which the hydroxyl-functional intermediate has an average of from 1.8 to 6 hydroxyl groups per molecule.

10. A method according to any one of the preceding claims in which the hydroxyl-functional intermediate has a number average molecular weight in the range from 1000 to 8000.

11. A method according to any one of claims 1 to 5 in which the hydroxyl-functional intermediate is of the formula

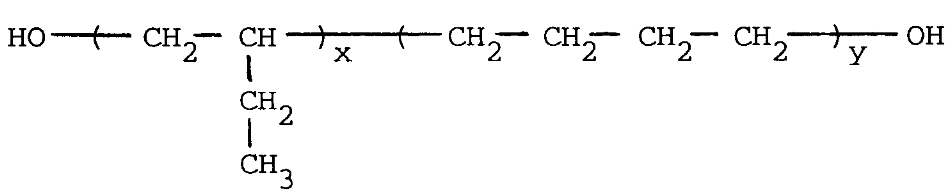

wherein the x and y units are randomly distributed, the x/y ratio is from 0.10 to 10.0 and wherein the average number of OH groups per molecule is from 1.5 to 4.0.

12. A method according to any one of the preceding claims in which the equivalent ratio of the free isocyanate groups to the blocking agent is from 0.5 to 2.0.

**13.** A method according to claim 12 in which the equivalent ratio of the free isocyanate groups to the blocking agent is from 0.9 to 1.1.

**14.** A method according to any one of the preceding claims in which the blocking agent is a lactam having from 3 to 20 carbon atoms.

**15.** A method according to claim 14 in which the blocking agent is caprolactam.

**16.** A method according to any one of claims 1 to 13 in which the blocking agent is a ketoxime having from 3 to 20 carbon atoms.

**17.** A method according to claim 16 in which the blocking agent is dimethylketoxime, methylethylketoxime, diisopropylketoxime or dicyclohexylketoxime.

**18.** A method according to any one of claims 1 to 13 in which the blocking agent is selected from
(i) $C_{6-20}$ phenols;
(ii) $C_{3-12}$ cyclic ureas;
(iii) dicarbonyl compounds of the formula

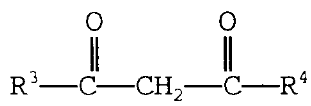

in which $R^3$ and $R^4$, independently, are $C_{1-6}$ alkyl, phenyl, or $R^5O$ where $R^5$ is H or $C_{1-12}$ alkyl;
(iv) enamines of the formula

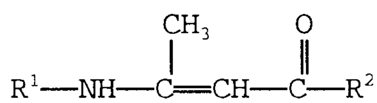

in which $R^1$ and $R^2$, independently, are $C_{1-4}$ alkyl;
(v) benzotriazole;
(vi) phenylimidazole.

**19.** A method according to any one of the preceding claims in which the amount of curing agent used is such that the ratio of blocked isocyanate groups to curing groups is from 0.8 to 4.0.

**20.** A method according to claim 19 in which the ratio of blocked isocyanate groups to curing groups is from 1.0 to 2.0.

**21.** A method according to any one of the preceding claims in which the crosslinking agent is selected from aliphatic di-, tri- and tetra-functional amines, primary or secondary, having a boiling point above 100 °C.

**22.** A method according to any one of the preceding claims using from 5 to 80 parts by weight of the silicone oil to 100 parts by weight of the blocked polyurethane prepolymer.

**23.** A method according to any one of the preceding claims in which the silicone oil has the structure

$(SiR^*_2O)_n$

in which
R is $C_{1-4}$ alkyl and
n is from 2 to 5000,
and R* optionally includes up to 10 repeat units% of $C_{1-4}$ fluoroalkyl, phenyl, Cℓ or $C_{1-4}$ alkoxy groups.

24. A method according to claim 23 in which the silicone oil is a linear polydimethylsiloxane.

25. A method according to any one of the preceding claims further comprising blending a micropowder filler in an amount of from 5 to 60 parts by weight to 100 parts by weight of the combined blocked polyurethane prepolymer, crosslinking agent and silicone oil.

26. A composition obtainable by a method according to any one of claims 1 to 25.

27. A elastomer substrate having a coating obtained by heat-curing a composition obtained by a method according to any one of claims 1 to 25.

28. An elastomer substrate according to claim 27 in which the elastomer is EPDM rubber.

29. An elastomer substrate according to claims 27 or claim 28 which is a glass-run channel for an automobile window.

30. A method comprising coating an elastomer substrate with a composition obtained according to any one of claims 1 to 25 and curing the composition by heating.

31. A method according to claim 30 in which the elastomer substrate is of EPDM rubber.

32. A method according to claim 30 or claim 31 in which the elastomer substrate is a glass-run channel for an automobile window.

33. A method according to any one of claims 30 to 32 in which the composition is coated onto the elastomer substrate without first applying a primer coating to the elastomer substrate.

**Patentansprüche**
**Patentansprüche für folgende Vertragsstaaten : DE, GB, FR, IT**

1. Wärmehärtbare Zusammensetzung, umfassend ein Gemisch aus:
   (a) einem geblockten Polyurethan-Präpolymer, das erhalten werden kann durch
      (i) Umsetzen eines Polyolefin-Zwischenprodukts mit Hydroxylfunktionalität, das durchschnittlich zumindest 1,5 Hydroxylgruppen pro Molekül und einen durchschnittlichen Polymerisationsgrad von 500 - 15.000 aufweist, mit einem Äquivalent-Überschuß von Polyisocyanat der Formel R-$(NCO)_n$, wobei n 2 bis 4 ist und R ein $C_{4-100}$-Aliphat, ein Aromat oder beides ist, sodaß freie Isocyanat-Gruppen verbleiben, und
      (ii) Blockieren der freien Isocyanat-Gruppen mit einem Blocker;
   (b) einem Vernetzer mit härtenden $-NH_2$-, $-NHR^6$- (wobei $R^6$ $C_{1-4}$-Alkyl ist), -OH- oder -SH-Gruppen zur Reaktion mit dem Präpolymer unter Erwärmen, um es zu härten, und
   (c) 1 - 100 Gewichtsteilen Silikonöl pro 100 Gewichtsteile des geblockten Polyurethan-Präpolymers.

2. Zusammensetzung nach Anspruch 1, worin das Polyisocyanat ein Diisocyanat ist und R 4 - 30 Kohlenstoffatome aufweist.

3. Zusammensetzung nach Anspruch 1 oder 2, worin das Polyisocyanat aus 4,4-Methylendiphenylisocyanat, Toluoldiisocyanat, 1,4-Phenylendiisocyanat, m- und p-Xylylendiisocyanaten, 1,6-Hexandiisocyanat und einem Gemisch aus Trimethylhexandiisocyanat und Isophorondiisocyanat ausgewählt ist.

4. Zusammensetzung nach irgendeinem der vorangegangenen Ansprüche, worin der Überschuß an Polyisocyanat zumindest 1,8 Äquivalente Isocyanat pro Äquivalent des Zwischenprodukts mit Hydroxylfunktionalität beträgt.

5. Zusammensetzung nach Anspruch 4, worin 2 - 8 Äquivalente Isocyanat pro Äquivalent des Zwischenprodukts mit Hydroxylfunktionalität eingesetzt sind.

6. Zusammensetzung nach irgendeinem der vorangegangenen Ansprüche, worin das Zwischenprodukt mit Hydroxylfunktionalität ein hydriertes Polydien ist, das gegebenenfalls bis zu 50 Mol-% von Resten

eines ethylenisch ungesättigten Nicht-Dien-Comonomers einschließt.

**7.** Zusammensetzung nach Anspruch 6, worin das hydrierte Polydien ein Polymer aus $C_{4-10}$-Dienmonomer und zumindest zu 50 Mol-% hydriert ist.

**8.** Zusammensetzung nach Anspruch 7, worin das hydrierte Polydien zu zumindest 95 Mol-% hydriert ist.

**9.** Zusammensetzung nach irgendeinem der vorangegangenen Ansprüche, worin das Zwischenprodukt mit Hydroxylfunktionalität durchschnittlich 1,8 - 6 Hydroxylgruppen pro Molekül aufweist.

**10.** Zusammensetzung nach irgendeinem der vorangegangenen Ansprüche, worin das Zwischenprodukt mit Hydroxylfunktionalität einen durchschnittlichen Polymerisationsgrad im Bereich von 1.000 - 8.000 aufweist.

**11.** Zusammensetzung nach irgendeinem der Ansprüche 1 - 5, worin das Zwischenprodukt mit Hydroxylfunktionalität der Formel

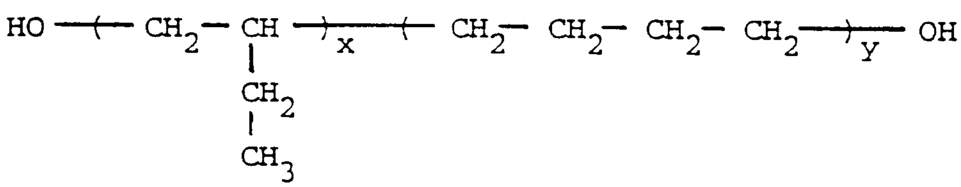

entspricht, worin die x- und y-Einheiten statistisch verteilt sind, das Verhältnis x/y 0,10 bis 10,0 beträgt und die durchschnittliche Anzahl der OH-Gruppen pro Molekül 1,5 - 4,0 beträgt.

**12.** Zusammensetzung nach irgendeinem der vorangegangenen Ansprüche, worin das Äquivalentverhältnis der freien Isocyanatgruppen zum Blocker 0,5 - 2,0 beträgt.

**13.** Zusammensetzung nach Anspruch 12, worin das Äquivalentverhältnis der freien Isocyanatgruppen zum Blocker 0,9 - 1,1 beträgt.

**14.** Zusammensetzung nach irgendeinem der vorangegangenen Ansprüche, worin der Blocker ein Lactam mit 3 - 20 Kohlenstoffatomen ist.

**15.** Zusammensetzung nach Anspruch 14, worin der Blocker Caprolactam ist.

**16.** Zusammensetzung nach irgendeinem der Ansprüche 1 - 13, worin der Blocker ein Ketoxim mit 3 - 20 Kohlenstoffatomen ist.

**17.** Zusammensetzung nach Anspruch 16, worin der Blocker Dimethylketoxim, Methylethylketoxim, Diisopropylketoxim oder Dicyclohexylketoxim ist.

**18.** Zusammensetzung nach irgendeinem der Ansprüche 1 - 13, worin der Blocker ausgewählt ist aus:
(i) $C_{6-20}$-Phenolen;
(ii) zyklischen $C_{3-12}$-Harnstoffen;
(iii) Dicarbonylverbindungen der Formel

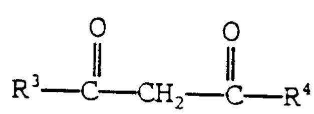

worin $R^3$ und $R^4$ unabhängig voneinander $C_{1-6}$-Alkyl, Phenyl oder $R^5O$ sind, wobei $R^5$ H oder $C_{1-12}$-Alkyl ist;

(iv) Enaminen der Formel

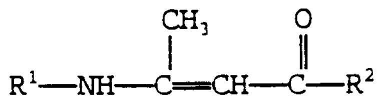

worin $R^1$ und $R^2$ unabhängig voneinander $C_{1-4}$-Alkyl sind;
(v) Benzotriazol;
(vi) Phenylimidazol.

**19.** Zusammensetzung nach irgendeinem der vorangegangenen Ansprüche, worin die Menge an verwendetem Härter derart ist, daß das Verhältnis von geblockten Isocyanatgruppen zu härtenden Gruppen 0,8 - 4,0 beträgt.

**20.** Zusammensetzung nach Anspruch 19, worin das Verhältnis von geblockten Isocyanatgruppen zu härtenden Gruppen 1,0 - 2,0 beträgt.

**21.** Zusammensetzung nach irgendeinem der vorangegangenen Ansprüche, worin der Vernetzer aus aliphatischen di-, tri- und tetrafunktionellen, primären oder sekundären, Aminen mit einem Siedepunkt von über 100 °C ausgewählt ist.

**22.** Zusammensetzung nach irgendeinem der vorangegangenen Ansprüche, die 5 - 80 Gewichtsteile des Silikonöls pro 100 Gewichtsteile des geblockten Polyurethan-Präpolymers verwendet.

**23.** Zusammensetzung nach irgendeinem der vorangegangenen Ansprüche, worin das Silikonöl die Struktur

$(SiR^*_2O)_n$

besitzt, worin $R^*$ $C_{1-4}$-Alkyl und n 2 - 5.000 ist und $R^*$ gegebenenfalls bis zu 10% sich wiederholender Einheiten aus $C_{1-4}$-Fluoralkyl-, Phenyl-, Cl- oder $C_{1-4}$-Alkoxy-Gruppen einschließt.

**24.** Zusammensetzung nach Anspruch 23, worin das Silikonöl ein lineares Polydimethylsiloxan ist.

**25.** Zusammensetzung nach irgendeinem der vorangegangenen Ansprüche, umfassend einen Mikropulver-Füller in einer Menge von 5 - 60 Gewichtsteilen pro 100 Gewichtsteile der kombinierten Bestandteile (a), (b) und (c).

**26.** Beschichtungs-Zusammensetzung, umfassend eine Zusammensetzung nach irgendeinem der Ansprüche 1 - 25, vermischt mit einem unreaktiven organischen Lösungsmittel oder Verdünner.

**27.** Gegenstand, umfassend eine gehärtete Zusammensetzung nach irgendeinem der Ansprüche 1 - 25.

**28.** Elastomer-Substrat mit einer Beschichtung aus einer gehärteten Zusammensetzung nach irgendeinem der Ansprüche 1 - 25.

**29.** Elastomer-Substrat nach Anspruch 28, worin das Elastomer EPDM-Gummi ist.

**30.** Elastomer-Substrat nach Anspruch 28 oder 29, das ein Glasscheiben-Führungskanal für ein Autofenster ist.

**31.** Verfahren, umfassend das Beschichten eines Elastomer-Substrats mit einer Zusammensetzung nach irgendeinem der Ansprüche 1 - 26 und das Härten der Zusammensetzung durch Erwärmen.

**32.** Verfahren nach Anspruch 31, worin das Elastomer-Substrat aus EPDM-Gummi besteht.

**33.** Verfahren nach Anspruch 31 oder 32, worin das Elastomer-Substrat ein Glasscheiben-Führungskanal für ein Autofenster ist.

**34.** Verfahren nach irgendeinem der Ansprüche 31 - 33, worin das Elastomer-Substrat ohne vorhergehendes Aufbringen einer Primer-Beschichtung auf das Elastomer-Substrat mit der Zusammensetzung beschichtet wird.

**35.** Verfahren zur Herstellung eine wärmehärtbaren Zusammensetzung, umfassend
(a) das Herstellen eines geblockten Polyurethan-Präpolymers durch
(i) Umsetzen eines Polyolefin-Zwischenprodukts mit Hydroxylfunktionalität, das durchschnittlich zumindest 1,5 Hydroxylgruppen pro Molekül und einen durchschnittlichen Polymerisationsgrad von 500 - 15.000 aufweist, mit einem Äquivalent-Überschuß von Polyisocyanat der Formel $R-(NCO)_n$, wobei n 2 bis 4 ist und R ein $C_{4-100}$-Aliphat, ein Aromat oder beides ist, sodaß freie Isocyanat-Gruppen verbleiben, und
(ii) Blockieren der freien Isocyanat-Gruppen mit einem Blocker;
und das Compoundieren des geblockten Polyurethan-Präpolymers mit
(b) einem Vernetzer mit härtenden $-NH_2$-, $-NHR^6$- (wobei $R^6$ $C_{1-4}$-Alkyl ist), -OH- oder -SH-Gruppen zur Reaktion mit dem Präpolymer unter Erwärmen, um es zu härten, und
(c) 1 - 100 Gewichtsteilen Silikonöl pro 100 Gewichtsteile des geblockten Polyurethan-Präpolymers.

**36.** Verfahren nach Anspruch 35, gekennzeichnet durch die Merkmale nach irgendeinem der Ansprüche 2 - 24.

**37.** Verfahren nach Anspruch 35 oder 36, weiters umfassend das Mischen eines Mikropulver-Füllers in einer Menge von 5 - 60 Gewichtsteilen mit 100 Gewichtsteilen der Kombination aus geblocktem Polyurethan-Präpolymer, Vernetzer und Silikonöl.

**Patentansprüche für folgenden Vertragsstaat : ES**

**1.** Verfahren zur Herstellung eine wärmehärtbaren Zusammensetzung, umfassend
(a) das Herstellen eines geblockten Polyurethan-Präpolymers durch
(i) Umsetzen eines Polyolefin-Zwischenprodukts mit Hydroxylfunktionalität, das durchschnittlich zumindest 1,5 Hydroxylgruppen pro Molekül und einen durchschnittlichen Polymerisationsgrad von 500 - 15.000 aufweist, mit einem Äquivalent-Überschuß von Polyisocyanat der Formel $R-(NCO)_n$, wobei n 2 bis 4 ist und R ein $C_{4-100}$-Aliphat, ein Aromat oder beides ist, sodaß freie Isocyanat-Gruppen verbleiben, und
(ii) Blockieren der freien Isocyanat-Gruppen mit einem Blocker;
und das Kompoundieren des geblockten Polyurethan-Präpolymers mit
(b) einem Vernetzer mit härtenden $-NH_2$-, $-NHR^6$- (wobei $R^6$ $C_{1-4}$-Alkyl ist), -OH- oder -SH-Gruppen zur Reaktion mit dem Präpolymer unter Erwärmen, um es zu härten, und
(c) 1 - 100 Gewichtsteilen Silikonöl pro 100 Gewichtsteile des geblockten Polyurethan-Präpolymers.

**2.** Verfahren nach Anspruch 1, worin das Polyisocyanat ein Diisocyanat ist und R 4 - 30 Kohlenstoffatome aufweist.

**3.** Verfahren nach Anspruch 1 oder 2, worin das Polyisocyanat aus 4,4-Methylendiphenylisocyanat, Toluoldiisocyanat, 1,4-Phenylendiisocyanat, m- und p-Xylylendiisocyanaten, 1,6-Hexandiisocyanat und einem Gemisch aus Trimethylhexandiisocyanat und Isophorondiisocyanat ausgewählt wird.

**4.** Verfahren nach irgendeinem der vorangegangenen Ansprüche, worin der Überschuß an Polyisocyanat zumindest 1,8 Äquivalente Isocyanat pro Äquivalent des Zwischenprodukts mit Hydroxylfunktionalität beträgt.

**5.** Verfahren nach Anspruch 4, worin 2 - 8 Äquivalente Isocyanat pro Äquivalent des Zwischenprodukts mit Hydroxylfunktionalität eingesetzt werden.

**6.** Verfahren nach irgendeinem der vorangegangenen Ansprüche, worin das Zwischenprodukt mit Hydroxylfunktionalität ein hydriertes Polydien ist, das gegebenenfalls bis zu 50 Mol-% von Resten eines

ethylenisch ungesättigten Nicht-Dien-Comonomers einschließt.

**7.** Verfahren nach Anspruch 6, worin das hydrierte Polydien ein Polymer aus $C_{4-10}$-Dienmonomer und zumindest zu 50 Mol-% hydriert ist.

**8.** Verfahren nach Anspruch 7, worin das hydrierte Polydien zu zumindest 95 Mol-% hydriert ist.

**9.** Verfahren nach irgendeinem der vorangegangenen Ansprüche, worin das Zwischenprodukt mit Hydroxylfunktionalität durchschnittlich 1,8 - 6 Hydroxylgruppen pro Molekül aufweist.

**10.** Verfahren nach irgendeinem der vorangegangenen Ansprüche, worin das Zwischenprodukt mit Hydroxylfunktionalität einen durchschnittlichen Polymerisationsgrad im Bereich von 1.000 - 8.000 besitzt.

**11.** Verfahren nach irgendeinem der Ansprüche 1 - 5, worin das Zwischenprodukt mit Hydroxylfunktionalität der Formel

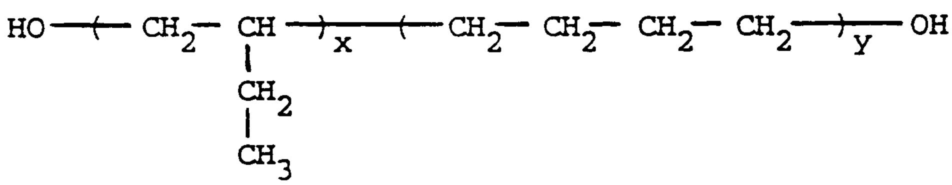

entspricht, worin die x- und y-Einheiten statistisch verteilt sind, das Verhältnis x/y 0,10 bis 10,0 beträgt und die durchschnittliche Anzahl der OH-Gruppen pro Molekül 1,5 - 4,0 beträgt.

**12.** Verfahren nach irgendeinem der vorangegangenen Ansprüche, worin das Äquivalentverhältnis der freien Isocyanatgruppen zum Blocker 0,5 - 2,0 beträgt.

**13.** Verfahren nach Anspruch 12, worin das Äquivalentverhältnis der freien Isocyanatgruppen zum Blocker 0,9 - 1,1 beträgt.

**14.** Verfahren nach irgendeinem der vorangegangenen Ansprüche, worin der Blocker ein Lactam mit 3 - 20 Kohlenstoffatomen ist.

**15.** Verfahren nach Anspruch 14, worin der Blocker Caprolactam ist.

**16.** Verfahren nach irgendeinem der Ansprüche 1 - 13, worin der Blocker ein Ketoxim mit 3 - 20 Kohlenstoffatomen ist.

**17.** Verfahren nach Anspruch 16, worin der Blocker Dimethylketoxim, Methylethylketoxim, Diisopropylketoxim oder Dicyclohexylketoxim ist.

**18.** Verfahren nach irgendeinem der Ansprüche 1 - 13, worin der Blocker ausgewählt wird aus:
(i) $C_{6-20}$-Phenolen;
(ii) zyklischen $C_{3-12}$-Harnstoffen;
(iii) Dicarbonylverbindungen der Formel

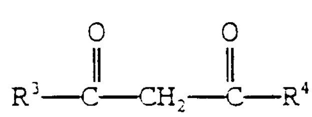

worin $R^3$ und $R^4$ unabhängig voneinander $C_{1-6}$-Alkyl, Phenyl oder $R^5O$ sind, wobei $R^5$ H oder $C_{1-12}$-Alkyl ist;

(iv) Enaminen der Formel

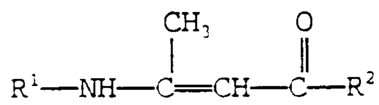

worin $R^1$ und $R^2$ unabhängig voneinander $C_{1-4}$-Alkyl sind;
(v) Benzotriazol;
(vi) Phenylimidazol.

**19.** Verfahren nach irgendeinem der vorangegangenen Ansprüche, worin die Menge an verwendetem Härter derart ist, daß das Verhältnis von geblockten Isocyanatgruppen zu härtenden Gruppen 0,8 - 4,0 beträgt.

**20.** Verfahren nach Anspruch 19, worin das Verhältnis von geblockten Isocyanatgruppen zu härtenden Gruppen 1,0 - 2,0 beträgt.

**21.** Verfahren nach irgendeinem der vorangegangenen Ansprüche, worin der Vernetzer aus aliphatischen di-, tri- und tetrafunktionellen, primären oder sekundären, Aminen mit einem Siedepunkt von über 100 °C ausgewählt wird.

**22.** Verfahren nach irgendeinem der vorangegangenen Ansprüche, die 5 - 80 Gewichtsteile des Silikonöls pro 100 Gewichtsteile des geblockten Polyurethan-Präpolymers verwendet.

**23.** Verfahren nach irgendeinem der vorangegangenen Ansprüche, worin das Silikonöl die Struktur

$(SiR^*_2O)_n$

besitzt, worin R* $C_{1-4}$-Alkyl und n 2 - 5.000 ist und R* gegebenenfalls bis zu 10% sich wiederholender Einheiten aus $C_{1-4}$-Fluoralkyl-, Phenyl-, Cl- oder $C_{1-4}$-Alkoxy-Gruppen einschließt.

**24.** Verfahren nach Anspruch 23, worin das Silikonöl ein lineares Polydimethylsiloxan ist.

**25.** Verfahren nach irgendeinem der vorangegangenen Ansprüche, weiters umfassend das Mischen eines Mikropulver-Füller in einer Menge von 5 - 60 Gewichtsteilen mit 100 Gewichtsteilen der Kombination aus geblocktem Polyurethan-Präpolymer, Vernetzer und Silikonöl.

**26.** Zusammensetzung, die nach einem Verfahren nach irgendeinem der Ansprüche 1 - 25 erhalten werden kann.

**27.** Elastomer-Substrat mit einer Beschichtung, die durch Wärmehärtung einer Zusammensetzung erhalten wird, die nach einem Verfahren nach irgendeinem der Ansprüche 1 - 25 erhalten wird.

**28.** Elastomer-Substrat nach Anspruch 27, worin das Elastomer EPDM-Gummi ist.

**29.** Elastomer-Substrat nach Anspruch 27 oder 28, das ein Glasscheiben-Führungskanal für ein Autofenster ist.

**30.** Verfahren, umfassend das Beschichten eines Elastomer-Substrats mit einer Zusammensetzung, die nach irgendeinem der Ansprüche 1 - 25 erhalten wird, und das Härten der Zusammensetzung durch Erwärmen.

**31.** Verfahren nach Anspruch 30, worin das Elastomer-Substrat aus EPDM-Gummi besteht.

**32.** Verfahren nach Anspruch 30 oder 31, worin das Elastomer-Substrat ein Glasscheiben-Führungskanal für ein Autofenster ist.

33. Verfahren nach irgendeinem der Ansprüche 30 - 32, worin das Elastomer-Substrat ohne vorhergehendes Aufbringen einer Primer-Beschichtung auf das Elastomer-Substrat mit der Zusammensetzung beschichtet wird.

**Revendications**
**Revendications pour les Etats contractants suivants : DE, GB, FR, IT**

1. Composition thermodurcissable, comprenant un mélange de :
(a) un prépolymère de polyuréthane bloqué pouvant être obtenu par
(i) la réaction d'une polyoléfine intermédiaire hydroxyle fonctionnelle ayant en moyenne au moins 1,5 groupes hydroxyles par molécule et un poids moléculaire moyen en nombre de 500 à 15000, avec des équivalents en excès d'un polyisocyanate selon la formule R $(NCO)_n$ où n est compris entre 2 et 4 et R est aliphatique, aromatique $C_{4-100}$ ou les deux, pour laisser des groupes isocyanates libres et
(ii) le blocage des groupes isocyanates libres avec un agent bloquant ;
(b) un agent réticulant ayant des groupes durcisseurs $-NH_2$, $-NHR^6$ (où $R^6$ est alkyle $C_{1-4}$), -OH ou -SH, pour réagir avec le prépolymère lorsqu'on le chauffe pour le durcir et
(c) 1 à 100 parties en poids d'une huile de silicone, pour 100 parties en poids du prépolymère de polyuréthane bloqué.

2. Composition selon la revendication 1 où le polyisocyanante est un diisocyanate et R a 4 à 30 atomes de carbone.

3. Composition selon la revendication 1 ou la revendication 2 où le polyisocyanate est choisi parmi 4,4-méthylènediphénylisocyanate, diisocyanate de toluène, 1-4-phénylènediisocyanate, m- et p-xylène diisocyanates, 1-6-hexane diisocyanate, diisocyanate de triméthylhexane et diisocyanate d'isophorone mélangés.

4. Composition selon l'une quelconque des revendications précédentes où l'excès du polyisocyanate implique au moins 1,8 équivalents d'isocyanate pour chaque équivalent de l'intermédiaire hydroxyle fontionnel.

5. Composition selon la revendication 4 où 2 à 8 équivalents d'isocyanate sont utilisés pour chaque équivalent de l'intermédiaire hydroxyle fonctionnel.

6. Composition selon l'une quelconque des revendications précédentes où l'intermédiaire hydroxyle fonctionnel est un polydiène hydrogéné, contenant facultativement jusqu'à 50% en moles de résidus d'un copolymère à insaturation éthylénique non diène.

7. Composition selon la revendication 6 où le polydiène hydrogéné est un polymère d'un monomère diène $C_{4-10}$ et est hydrogéné au moins à 50% en moles.

8. Composition selon la revendication 7 où le polydiène hydrogéné est hydrogéné au moins à 95% en moles.

9. Composition selon l'une quelconque des revendications précédentes où l'intermédiaire hydroxyle fonctionnel a une moyenne de 1,8 à 6 groupes hydroxyles par molécules.

10. Composition selon l'une quelconque des revendications précédentes où l'intermédiaire hydroxyle fonctionnel a un poids moléculaire moyen en nombre compris entre 1000 et 8000.

11. Composition selon l'une quelconque des revendications 1 à 5 où l'intermédiaire hydroxyle fonctionnel est de la formule

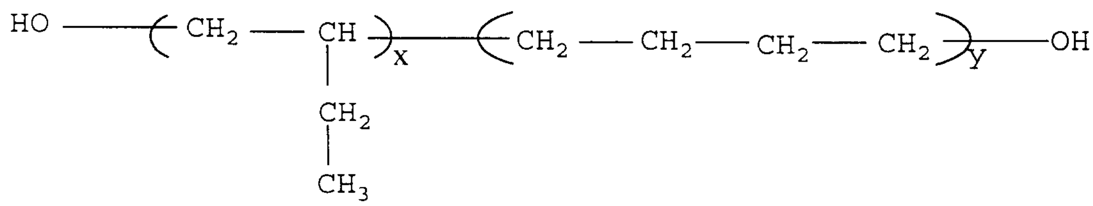

où les unités x et y sont statistiquement distribuées, le rapport x/y est compris entre 0,10 et 10,0 et où le nombre moyen de groupes OH par molécule est compris entre 1,5 et 4,0.

**12.** Composition selon l'une quelconque des revendications précédentes où le rapport équivalent des groupes isocyanates libres à l'agent bloquant est compris entre 0,5 et 2,0.

**13.** Composition selon la revendication 12 où le rapport équivalent des groupes isocyanates libres à l'agent bloquant est compris entre 0,9 et 1,1.

**14.** Composition selon l'une quelconque des revendications précédentes où l'agent bloquant est un lactame ayant 3 à 20 atomes de carbone.

**15.** Composition selon la revendication 14 où l'agent bloquant est caprolactame.

**16.** Composition selon l'une quelconque des revendications 1 à 13 où l'agent bloquant est une cétoxime ayant 3 à 20 atomes de carbone.

**17.** Composition selon la revendication 16 où l'agent bloquant est une diméthylcétoxime, une méthyléthylcétoxime, une diisopropylcétoxime ou une dicyclohexylcétoxime.

**18.** Composition selon l'une quelconque des revendications 1 à 13 où l'agent bloquant est choisi parmi :
(i) phénols $C_{6-20}$ ;
(ii) urées cycliques $C_{3-12}$ ;
(iii) composés de dicarbonyle de la formule

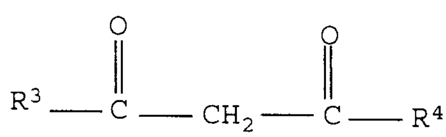

où $R^3$ et $R^4$, indépendamment, sont alkyle $C_{1-6}$, phényle ou bien $R^5O$ où $R^5$ est H ou alkyle $C_{1-12}$ ;
(iv) énamines de la formule

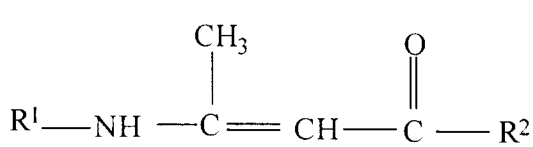

où $R^1$ et $R^2$, indépendamment, sont alkyle $C_{1-4}$ ;
(v) benzotriazole ;
(vi) phénylimidazole.

**19.** Composition selon l'une quelconque des revendications précédentes où la quantité de l'agent durcissant utilisé est telle que le rapport des groupes isocyanates bloqués aux groupes durcissants soit de 0,8 à 4,0.

**20.** Composition selon la revendication 19, où le rapport des groupes isocyanates bloqués aux groupes durcissants est de 1,0 à 2,0.

**21.** Composition selon l'une quelconque des revendications précentes où l'agent réticulant est choisi parmi des amines aliphatiques di-, tri- et tétrafonctionnelles, primaires ou secondaires, ayant un point d'ébullition au-delà de 100 ° C.

**22.** Composition selon l'une quelconque des revendications précédentes utilisant 5 à 80 parties en poids de l'huile de silicone pour 100 parties en poids du prépolymère de polyuréthane bloqué.

**23.** Composition selon l'une quelconque des revendications précédentes où l'huile de silicone a pour structure

$(SiR^*_2O)_n$

où
R* est alkyle $C_{1-4}$ et
n est compris entre 2 et 5000,
et R* contient facultativement jusqu'à 10 unités récurrentes % de groupes fluroalkyles $C_{1-4}$, phényle, Cl ou alcoxy $C_{1-4}$.

**24.** Composition selon la revendication 23 où l'huile de silicone est un polydiméthylsiloxane linéaire.

**25.** Composition selon l'une quelconque des revendications précédentes comprenant une charge en micro-poudre en une quantité de 5 à 60 parties en poids pour 100 parties en poids des ingrédients (a), (b) et (c) combinés.

**26.** Composition de revêtement comprenant une composition selon l'une quelconque des revendications 1 à 25 en mélange avec un solvant ou diluant organique non réactif.

**27.** Article comprenant une composition durcie selon l'une quelconque des revendications 1 à 25.

**28.** Substrat d'élastomère ayant un revêtement d'une composition durcie selon l'une quelconque des revendications 1 à 25.

**29.** Substrat d'élastomère selon la revendication 28 où l'élastomère est le caoutchouc EPDM.

**30.** Substrat d'élastomère selon les revendications 28 ou 29 qui est un canal de passage d'une vitre pour une fenêtre d'automobile.

**31.** Méthode consistant à revêtir un substrat d'élastomère d'une composition selon l'une quelconque des revendications 1 à 26 et à durcir la composition en la chauffant.

**32.** Méthode selon la revendication 31 où le substrat d'élastomère est du caoutchouc EPDM.

**33.** Méthode selon la revendication 31 ou la revendication 32 où le substrat d'élastomère est un canal de passage d'une vitre pour une fenêtre d'automobile.

**34.** Méthode selon l'une quelconque des revendications 31 à 33 où la composition est enduite sur le substrat d'élastomère sans appliquer d'abord un revêtement d'apprêt au substrat d'élastomère.

**35.** Méthode de production d'une composition thermodurcissable consistant à
(a) produire un prépolymère de polyuréthane bloqué par
(i) réaction d'un intermédiaire de polyoléfine hydroxyle fonctionnelle ayant en moyenne au moins 1,5 groupes hydroxyles par molécule et un poids moléculaire moyen en nombre de 500 à 15000 avec des équivalents en excès d'un polyisocyanate selon la formule $R(NCO)_n$ où n est compris entre 2 et 4 et R est aliphatique, aromatique $C_{4-100}$ ou les deux, pour laisser des groupes isocyanates libres et

(ii) blocage des groupes isocyanates libres avec un agent bloquant ;
et mélanger le prépolymère de polyuréthane bloqué avec
(b) un agent réticulant ayant des groupes durcisseurs $-NH_2$, $-NHR^6$ (où $R^6$ est alkyle $C_{1-4}$), -OH ou -SH, devant réagir avec le prépolymère lors de son chauffage pour le durcir et
(c) environ 1 à environ 100 parties en poids d'une huile de silicone pour 100 parties en poids du prépolymère de polyuréthane bloqué.

**36.** Méthode selon la revendication 35 qualifiée par les caractéristiques de l'une quelconque des revendications 2 à 24.

**37.** Méthode selon la revendication 35 ou la revendication 36 consistant de plus à mélanger une charge en micro-poudre en une quantité de 5 à 60 parties en poids pour 100 parties en poids du prépolymère de polyuréthane bloqué, de l'agent réticulant et l'huile de silicone combinés.

**Revendications pour l'Etat contractant suivant : ES**

**1.** Méthode de fabrication d'une composition thermodurcissable, comprenant
(a) la fabrication d'un prépolymère de polyuréthane bloqué par
(i) la réaction d'une polyoléfine intermédiaire hydroxyle fonctionnelle ayant en moyenne au moins 1,5 groupes hydroxyles par molécule et un poids moléculaire moyen en nombre de 500 à 15000, avec des équivalents en excès d'un polyisocyanate selon la formule $R(NCO)_n$ où n est compris entre 2 et 4 et R est aliphatique, aromatique $C_{4-100}$ ou les deux pour laisser des groupes isocyanates libres et
(ii) le blocage des groupes isocyanates libres avec un agent bloquant ;
(b) un agent réticulant ayant des groupes durcisseurs $-NH_2$, $-NHR^6$ (où $R^6$ est alkyle $C_{1-4}$), -OH ou -SH, pour réagir avec le prépolymère lorsqu'on le chauffe pour le durcir et
(c) 1 à 100 parties en poids d'une huile de silicone, pour 100 parties en poids du prépolymère de polyuréthane bloqué.

**2.** Méthode selon la revendication 1 où le polyisocyanante est un diisocyanate et R a 4 à 30 atomes de carbone.

**3.** Méthode selon la revendication 1 ou la revendication 2 où le polyisocyanate est choisi parmi 4,4-méthylènediphénylisocyanate, diisocyanate de toluène, 1-4- phénylènediisocyanate, m- et p-xylène diisocyanates, 1-6-hexane diisocyanate, diisocyanate de triméthylhexane et diisocyanate d'isophorone mélangés.

**4.** Méthode selon l'une quelconque des revendications précédentes où l'excès du polyisocyanate implique au moins 1,8 équivalents d'isocyanate pour chaque équivalent de l'intermédiaire hydroxyle fontionnel.

**5.** Méthode selon la revendication 4 où 2 à 8 équivalents d'isocyanate sont utilisés pour chaque équivalent de l'intermédiaire hydroxyle fonctionnel.

**6.** Méthode selon l'une quelconque des revendications précédentes où l'intermédiaire hydroxyle fonctionnel est un polydiène hydrogéné, contenant facultativement jusqu'à 50% en moles de résidus d'un copolymère à insaturation éthylénique non diène.

**7.** Méthode selon la revendication 6 où le polydiène hydrogéné est un polymère d'un monomère diène $C_{4-10}$ et est hydrogéné au moins à 50% en moles.

**8.** Méthode selon la revendication 7 où le polydiène hydrogéné est hydrogéné au moins à 95% en moles.

**9.** Méthode selon l'une quelconque des revendications précédentes où l'intermédiaire hydroxyle fonctionnel a une moyenne de 1,8 à 6 groupes hydroxyles par molécules.

**10.** Méthode selon l'une quelconque des revendications précédentes où l'intermédiaire hydroxyle fonctionnel a un poids moléculaire moyen en nombre compris entre 1000 et 8000.

**11.** Méthode selon l'une quelconque des revendications 1 à 5 où l'intermédiaire hydroxyle fonctionnel est de la formule

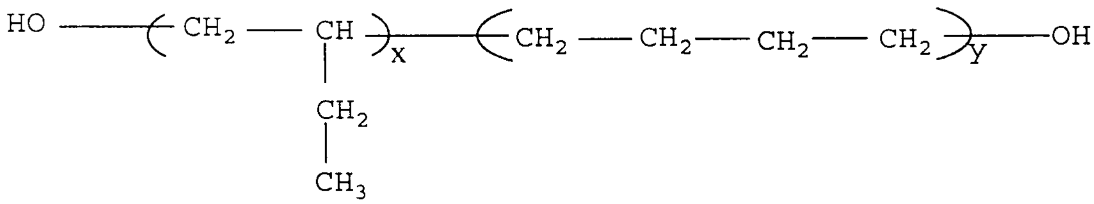

où les unités x et y sont statistiquement distribuées, le rapport x/y est compris entre 0,10 et 10,0 et où le nombre moyen de groupes OH par molécule est compris entre 1,5 et 4,0.

**12.** Méthode selon l'une quelconque des revendications précédentes où le rapport équivalent des groupes isocyanates libres à l'agent bloquant est compris entre 0,5 et 2,0.

**13.** Méthode selon la revendication 12 où le rapport équivalent des groupes isocyanates libres à l'agent bloquant est compris entre 0,9 et 1,1.

**14.** Méthode selon l'une quelconque des revendications précédentes où l'agent bloquant est un lactame ayant 3 à 20 atomes de carbone.

**15.** Méthode selon la revendication 14 où l'agent bloquant est caprolactame.

**16.** Méthode selon l'une quelconque des revendications 1 à 13 où l'agent bloquant est une cétoxime ayant 3 à 20 atomes de carbone.

**17.** Méthode selon la revendication 16 où l'agent bloquant est une diméthylcétoxime, une méthyléthylcétoxime, une diisopropylcétoxime ou une dicyclohexylcétoxime.

**18.** Méthode selon l'une quelconque des revendications 1 à 13 où l'agent bloquant est choisi parmi :
(i) phénols $C_{6-20}$ ;
(ii) urées cycliques $C_{3-12}$ ;
(iii) composés de dicarbonyle de la formule

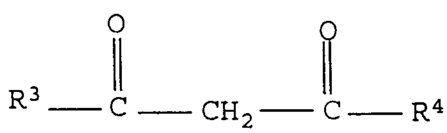

où $R^3$ et $R^4$, indépendamment, sont alkyle $C_{1-6}$, phényle ou bien $R^5O$ où $R^5$ est H ou alkyle $C_{1-12}$ ;
(iv) énamines de la formule

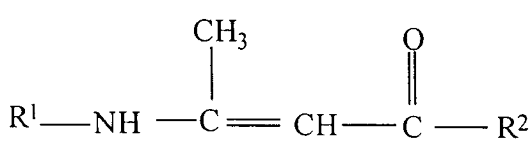

où $R^1$ et $R^2$, indépendamment, sont alkyle $C_{1-4}$ ;
(v) benzotriazole ;
(vi) phénylimidazole.

**19.** Méthode selon l'une quelconque des revendications précédentes où la quantité de l'agent durcissant utilisé est telle que le rapport des groupes isocyanates bloqués aux groupes durcissants soit de 0,8 à

4,0.

**20.** Méthode selon la revendication 19, où le rapport des groupes isocyanates bloqués aux groupes durcissants est de 1,0 à 2,0.

**21.** Méthode selon l'une quelconque des revendications précentes où l'agent réticulant est choisi parmi des amines aliphatiques di-, tri- et tétrafonctionnelles, primaires ou secondaires ayant un point d'ébullition au-delà de 100 ° C.

**22.** Méthode selon l'une quelconque des revendications précédentes utilisant 5 à 80 parties en poids de l'huile de silicone pour 100 parties en poids du prépolymère de polyuréthane bloqué.

**23.** Méthode selon l'une quelconque des revendications précédentes où l'huile de silicone a pour structure

$(SiR^*_2O)_n$

où

R* est alkyle $C_{1-4}$ et

n est compris entre 2 et 5000,

et R* contient facultativement jusqu'à 10 unités récurrentes % de groupes fluroalkyles $C_{1-4}$, phényle, Cl ou alcoxy $C_{1-4}$.

**24.** Méthode selon la revendication 23 où l'huile de silicone est un polydiméthylsiloxane linéaire.

**25.** Méthode selon l'une quelconque des revendications précédentes comprenant une charge en micropoudre en une quantité de 5 à 60 parties en poids pour 100 parties en poids des ingrédients (a), (b) et (c) combinés.

**26.** Composition pouvant être obtenue par une méthode selon l'une quelconque des revendications 1 à 25.

**27.** Substrat d'élastomère ayant un revêtement pouvant être obtenu par thermodurcissement d'une composition obtenue par une méthode selon l'une quelconque des revendications 1 à 25.

**28.** Substrat d'élastomère selon la revendication 27 où l'élastomère est un caoutchouc EPDM.

**29.** Substrat d'élastomère selon les revendications 27 ou 28 qui est un canal de passage de la vitre pour une fenêtre d'automobile.

**30.** Méthode consistant à enduire un substrat d'élastomère d'une composition obtenue selon l'une quelconque des revendications 1 à 25 et à durcir la composition en la chauffant.

**31.** Méthode selon la revendication 31 où le substrat d'élastomère est du caoutchouc EPDM.

**32.** Méthode selon la revendication 31 ou la revendication 32 où le substrat d'élastomère est un canal de passage d'une vitre pour une fenêtre d'automobile.

**33.** Méthode selon l'une quelconque des revendications 31 à 33 où la composition est enduite sur le substrat d'élastomère sans appliquer d'abord un revêtement d'apprêt au substrat d'élastomère.